# EUROPÄISCHE PATENTSCHRIFT

(11) **EP 3 790 395 B1**
(45) Veröffentlichungstag und Bekanntmachung des Hinweises auf die Patenterteilung: **08.04.2026**
(21) Anmeldenummer: 19720894.5
(22) Anmeldetag: 02.05.2019
(51) Int. Cl.: A01P 5/00, A01M 17/00, A01M 1/02

(54) **BEKÄMPFUNG VON NEMATODEN**
CONTROL OF NEMATODES
LUTTE CONTRE LES NÉMATODES

(30) Priorität: 09.05.2018 EP 18171591
(43) Veröffentlichungstag der Anmeldung: 17.03.2021
(73) Patentinhaber: BAYER CROPSCIENCE, S.L., Barcelona (ES)
(72) Erfinder: IZQUIERDO, Josep Ignasi, 08015 BARCELONA (ES)
(74) Vertreter: BIP Patents
(86) Internationale Anmeldenummer: PCT/EP2019/061251
(87) Internationale Veröffentlichungsnummer: WO 2019/215008

(56) Entgegenhaltungen:
- WO-A1-2009/132425
- WO-A1-2014/039943
- CN-A- 103 340 193
- CN-A- 106 416 704
- KR-A- 20030 051 123
- US-A1- 2006 242 900
- XIUMIN YAN ET AL: "Daytime warming has stronger negative effects on soil nematodes than night-time warming", SCIENTIFIC REPORTS, vol. 7, no. 108, 7 March 2017 (2017-03-07), pages 1 - 6, XP002783548, DOI: 10.1038/S41598-017-00218-4
- VELA MARÍA DOLORES ET AL: "Thermal time requirements of root-knot nematodes on zucchini-squash and population dynamics with associated yield losses on spring and autumn cropping cycles", EUROPEAN JOURNAL OF PLANT PATHOLOGY, SPRINGER NETHERLANDS, NL, vol. 140, no. 3, 18 July 2014 (2014-07-18), pages 481 - 490, XP035401149, ISSN: 0929-1873, [retrieved on 20140718], DOI: 10.1007/S10658-014-0482-X

## Beschreibung

Die vorliegende Erfindung befasst sich mit dem technischen Gebiet des Pflanzenschutzes. Gegenstand der vorliegenden Erfindung sind ein System, ein Verfahren, ein Kit und ein Computerprogrammprodukt zur Bekämpfung von Nematoden.

Nematoden gehören zur vielfältigen biologischen Klasse der Fadenwürmer. Zumeist handelt es sich um relativ kleine weiße bis farblose fadenförmige Würmchen. Nematoden kommen fast überall vor. Sie haben sich weltweit an verschiedene Lebensräume angepasst. Sie treten sowohl in Süß- als auch in Salzwasser, im Boden, in Pflanzen, in verrottender organischer Substanz oder als Parasiten an Tieren und Menschen auf.

Von den etwa 20.000 bekannten Nematodenarten ernähren sich ca. 3.000 von Pflanzen. Etwa 100 Arten sind bedeutende Schädlinge an Kulturpflanzen. Die pflanzenschädlichen endoparasitischen Arten sind im Mittel 1 mm lang. Sie befallen das Wurzelsystem der Wirtspflanzen und beeinträchtigen deren Stoffwechsel stark. Mit einem Mundstachel stechen sie Pflanzenzellen an, geben Speichel ab und induzieren damit ein Nährzellengewebe, aus dem sie Zellinhalt zur eigenen Ernährung aufnehmen.

Der typische Lebenszyklus eines Nematoden sei anhand des Rübenzystennematoden erläutert. Das Überdauerungsorgan des Nematoden ist die Zyste. Sie ist etwa stecknadelkopfgroß und kann 200 bis 300, im Extremfall über 600 Eier und Larven enthalten. Durch Anbau von Wirtspflanzen kommt es zu einer "Aktivierung" der in der Zyste enthaltenen Larven. Wurzelausscheidungen üben einen Schlupfreiz auf die Larven aus, sodass diese die Zyste verlassen. Mithilfe seines Mundstachels dringt der Nematode in das Wurzelsystem ein. Er setzt sich nach kurzer Wanderung in der Wurzel fest, induziert die Bildung des Syncytiums und durchläuft weitere Larvenstadien, bis er sich zu einem ausgewachsenen Männchen oder Weibchen entwickelt. Die weißen Weibchen schwellen an, brechen mit dem Hinterende aus der Wurzel heraus, bleiben aber mit dem Kopf im Nährzellensystem verankert. Die Begattung erfolgt durch die freilebenden Männchen außerhalb der Wurzel. Anschließend reifen in jedem Weibchen im Mittel 250 bis 300 Eier heran. Das Weibchen stirbt ab, der zitronenförmige Körper färbt sich von weiß über hellbraun zur dunkelbraunen Zyste, die sich später von der Wurzel ablöst. In dieser derbwandigen Zyste bleiben die Eier und Larven über 10 Jahre lebensfähig.

Die Entwicklungsdauer einer Generation von Nematoden ist stark temperaturabhängig. Zum Beispiel wird für den Abschluss einer Generation von *Heterodera schachtii* eine Wärmesumme von 465 Gradtage (°C × Tage) benötigt. Diese Summe kann ermittelt werden, indem täglich die Bodendurchschnittstemperaturen in 10 - 20 cm Tiefe und die Werte oberhalb der Basistemperatur 8 °C gemessen werden.

Gegen einen Nematodenbefall kommen verschiedene chemische Substanzen zum Einsatz. Einer chemischen Bekämpfung stehen aus ökologischer Sicht und aufgrund der Mittelzulassung jedoch zunehmend mehr Einschränkungen entgegen.

Alternativ werden biologische Bekämpfungsmethoden eingesetzt; zum Beispiel ein Nematizid auf Basis des Schimmelpilzes *Paecilomyces lilacinus,* der vorzugsweise Nematodeneier befällt.

Bei der Bekämpfung ist es wichtig, die jeweilige Methode möglichst effizient einzusetzen, um Kosten zu sparen, die Umwelt zu schonen, und/oder eine hohe Qualität der Ernte zu sichern.

US2006242900 beschreibt eine Methode und ein System zur Bekaempfung von Nematoden im Boden unter Verwendung einer Reihe von isolierten elektrischen Heizdecken, die den Boden erhitzen, um Nematoden abzutoeten. Die Decken werden ueber eine programmierbare Logiksteuerung kontrolliert.

WO2014/039943 beschreibt ein mobiles Solarsystem, das Sonnenlicht konzentriert, um Böden zu desinfizieren und zu sterilisieren. Das System besteht aus einer beweglichen Plattform mit steuerbaren Spiegelflächen, die Sonnenlicht auf den Boden fokussieren können. Durch die Konzentration des Sonnenlichts kann der Boden schnell auf hohe Temperaturen erhitzt werden, um Schädlinge, Unkräuter und Krankheitserreger abzutöten.

Der Artikel mit der Nummer XP002783548 (Xiumin Yan et al, Scientific Reports, Bd 7, Nr 108, 2017, Seiten 1 bis 6) beschreibt den Einfluss von Temperaturen waehrend Tag afu Nematoden Populationen im Boden.

KR20030051123A beschreibt ein umweltfreundliches Landwirtschaftsverfahren und eine Landwirtschaftsvorrichtung, die Sonnenenergie direkt in den Boden einstrahlen. Die Vorrichtung enthält transparente Stifte aus Quarz oder Glas, die Sonnenlicht in den Boden leiten. Eine Sammellinse aus Glas oder Quarz konzentriert das Sonnenlicht und leitet es über Lichtwellenleiterkabel zu den Stiften. Zusätzlich kann die Vorrichtung Infrarotstrahlung erzeugen, um das Pflanzenwachstum zu fördern und Schädlinge im Boden abzutöten.

CN 103 340 193 A beschreibt ein automatisiertes System zur Bekämpfung von Wurzelgallennematoden im Boden durch Dampfeinspritzung. Das System besteht aus einem Träger, einem Hubarm, einer Steuerung, einem Dampferzeuger, einer Dampfverteilungskabine und einem Injektionsmechanismus.WO 2009/132425 beschreibt ein drahtloses Kontrollsystem, das variable Leistung und duale Transceiver- Controller-Module verwendet. Das System kann in einer Vielzahl von Anwendungen wie Bewässerung, Fertigung, Sicherheit und Umweltüberwachung eingesetzt werden.

CN 106 416 704 A beschreibt ein Verfahren zum Anbau von Gurken in einem Gewächshaus im Winter unter Verwendung eines automatischen Temperaturregelsystems. Das System kontrolliert die Bodentemperatur, um das optimale Wachstum der Gurkenpflanzen zu fördern. Eine spezielle Grunddüngung und regelmäßige Blattdüngung tragen dazu bei, Nematoden, Mehltau und Falschen Mehltau zu reduzieren und den Ertrag zu steigern.

Diese Aufgaben werden durch die Gegenstände der unabhängigen Ansprüche gelöst. Bevorzugte Ausführungsformen finden sich in den abhängigen Ansprüchen, sowie in der vorliegenden Beschreibung und den Zeichnungen.

Ein erster Gegenstand der vorliegenden Erfindung ist ein Verfahren zur Bekämpfung von Nematoden in einem Boden umfassend die Schritte
(A) Installieren eines Temperatursensors in dem Boden
(B) Bereitstellen eines Modells der temperaturabhängigen Entwicklung von Nematoden, wobei das Modell das vollständige oder teilweise Durchlaufen eines oder mehrerer Lebenszyklen der Nematoden modelliert
(C) Messen von Temperaturwerten in dem Boden zu Messzeitpunkten
(D) Verknüpfen der Temperaturwerte mit den Messzeitpunkten
(E) Berechnen einer Wärmesumme auf Basis der Temperaturwerte und der Messzeitpunkte
(F) Vergleichen der berechneten Wärmesumme mit einem Zielparameter, wobei der Zielparameter diejenige Wärmesumme angibt, die erforderlich ist, um ein lokales Maximum der Menge an Nematoden in einem bekämpfbaren Nematodenstadium zu erreichen,
(G) Ausgeben einer Mitteilung für den Fall, dass die berechnete Wärmesumme den Zielparameter erreicht,
(H) Applizieren eines Bekämpfungsmittels gegen Nematoden in dem bekämpfbaren Nematodenstadium.

Ein weiterer Gegenstand der vorliegenden Erfindung ist ein System umfassend
- eine Sensoreinheit mit einem Temperatursensor und einer Sendeeinheit, und
- ein Computersystem mit einer Empfangseinheit
   und
- ein Applikationssystem,
- wobei die Sensoreinheit konfiguriert ist, Temperaturwerte mit dem Temperatursensor zu Messzeitpunkten zu erfassen,
- wobei die Sensoreinheit konfiguriert ist, die Temperaturwerte mit der Sendeeinheit zu versenden,
- wobei das Computersystem konfiguriert ist, die Temperaturwerte mit der Empfangseinheit zu empfangen,
- wobei das Computersystem konfiguriert ist, auf Basis der empfangenen Temperaturwerte und der Messzeitpunkte mit Hilfe eines Modells der temperaturabhängigen Entwicklung von Nematoden einen temperaturabhängigen Entwicklungsparameter zu berechnen und diesen mit einem Zielparameter zu vergleichen,
   ∘ wobei das Modell das vollständige oder teilweise Durchlaufen eines oder mehrerer Lebenszyklen der Nematoden modelliert,
   ∘ wobei es sich bei dem temperaturabhängigen Entwicklungsparameter um eine Wärmesumme handelt,
   ∘ wobei es sich bei dem Zielparameter um diejenige Wärmesumme handelt, die erforderlich ist, um ein lokales Maximum der Menge an Nematoden in einem bekämpfbaren Nematodenstadium zu erreichen,
- wobei das Computersystem konfiguriert ist, eine Mitteilung zu erzeugen, wenn der temperaturabhängige Entwicklungsparameter den Zielparameter erreicht, wobei die Mitteilung die Aufforderung enthält, dass eine Applikation eines Bekämpfungsmittels gegen Nematoden in dem bekämpfbaren Nematodenstadium erfolgen sollte, und das Applikationssystem ein Bekämpfungsmittel gegen Nematoden in dem bekämpfbaren Nematodenstadium appliziert.

Ein weiterer Gegenstand der vorliegenden Erfindung ist ein Computerprogrammprodukt umfassend einen Programmcode, der auf einem Datenträger gespeichert ist, und der ein Computersystem umfassend einen Arbeitsspeicher veranlasst, die folgenden Schritte auszuführen, wenn der Programmcode in den Arbeitsspeicher geladen ist,
- Empfangen von Temperaturwerten, die zu Messzeitpunkten erfasst worden sind,
- Berechnen eines temperaturabhängigen Entwicklungsparameters auf Basis der empfangenen Temperaturwerte und der Messzeitpunkte mit Hilfe eines Modells der temperaturabhängigen Entwicklung von Nematoden,
   ∘ wobei das Modell das vollständige oder teilweise Durchlaufen eines oder mehrerer Lebenszyklen der Nematoden modelliert,
   ∘ wobei es sich bei dem temperaturabhängigen Entwicklungsparameter um eine Wärmesumme handelt,
- Vergleichen des berechneten temperaturabhängigen Entwicklungsparameters mit einem definierten Zielparameter
   ∘ wobei es sich bei dem Zielparameter um diejenige Wärmesumme handelt, die erforderlich ist, um ein lokales Maximum der Menge an Nematoden in einem bekämpfbaren Nematodenstadium zu erreichen,
- Erzeugen einer Mitteilung, wenn der temperaturabhängige Entwicklungsparameter den definierten Zielparameter erreicht, womit das Applikationssystem ein Bekämpfungsmittel gegen Nematoden in dem bekämpfbaren Nematodenstadium appliziert.

Ein weiterer Gegenstand der vorliegenden Erfindung ist ein Kit umfassend das erfindungsgemäße Computerprogrammprodukt und ein Bekämpfungsmittel gegen Nematoden in einem bekämpfbaren Nematodenstadium, vorzugsweise ein Nematizid auf Basis des Schimmelpilzes *Paecilomyces lilacinus* gegen Nematodeneier, und/oder eine Sensoreinheit mit einem Temperatursensor und einer Sendeeinheit.

Die Erfindung wird nachstehend näher erläutert, ohne zwischen den Erfindungsgegenständen (System, Verfahren, Computerprogrammprodukt) zu unterscheiden. Die nachfolgenden Erläuterungen sollen vielmehr für alle Erfindungsgegenstände in analoger Weise gelten, unabhängig davon, in welchem Kontext die Erläuterungen erfolgen.

Wenn in der vorliegenden Beschreibung oder in den Patentansprüchen Schritte in einer Reihenfolge genannt werden, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden können; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der vorliegenden Erfindung dar.

Die vorliegende Erfindung stellt Mittel zur effizienten Bekämpfung von Nematoden bereit. Insbesondere handelt es sich um Nematoden, die als Schädlinge im Gartenbau und/oder der Landwirtschaft in Erscheinung treten. Die vorliegende Erfindung eignet sich besonders zur Bekämpfung von *Meloidogyne spp., Radopholus similis, Globodera spp.* und/oder *Pratylenchus spp.*

Ein wesentliches Element der vorliegenden Erfindung ist ein Temperatursensor. Mit ihm wird die Temperatur eines Bodens in einer Tiefe von 10 cm bis 20 cm gemessen. In diesem Bereich halten sich Nematoden üblicherweise auf.

Vorzugsweise ist der Temperatursensor ein Bestandteil einer Sensoreinheit, die nach einer Inbetriebnahme automatisiert Temperaturwerte erfasst und mittels einer Sendeeinheit an ein Computersystem übermittelt.

Das erfindungsgemäße System kann einen oder mehrere Temperatursensoren umfassen. Das erfindungsgemäße System kann einen oder mehrere Sensoreinheiten umfassen. Eine Sensoreinheit kann einen oder mehrere Temperatursensoren umfassen.

Vorzugsweise verfügt die Sensoreinheit über eine eindeutige Kennung. Die eindeutige Kennung kann eine Nummer oder ein alphanumerischer Code oder ein Binärcode oder dergleichen sein. Die eindeutige Kennung dient zur Identifizierung der Sensoreinheit bei ihrer Registrierung.

Die Sensoreinheit verfügt über eine Sendeeinheit. Denkbar ist auch, dass sich mehrere Sensoreinheiten eine gemeinsame Sendeeinheit teilen. Über die Sendeinheit werden die erfassten Temperaturwerte an ein externes Computersystem übermittelt. Die Übermittlung erfolgt vorzugsweise zumindest teilweise über Funk. Denkbar ist die Übermittlung über Bluetooth, WLAN, ein Mobilfunknetz, ein Niedrigenergieweitverkehrnetzwerk (Low Power Wide Area Network (LPWAN oder LPN)) wie beispielsweise ein NarrowBand IoT Netzwerk, über das Sigfox-Funknetzwerk, kabelgebunden (z.B. über ein LAN) und/oder dergleichen.

Vorzugsweise ist der einen oder den mehreren zum erfindungsgemäßen System gehörigen Sensoreinheiten jeweils ein Standort zugeordnet. Üblicherweise handelt es sich um den Standort, an dem die Sensoreinheit Temperaturwerte erfasst. Es kann sich aber auch um einen Standort in der Umgebung der Sensoreinheit handeln, oder der Standort kann eine Unschärfe aufweisen, indem beispielsweise ein Bereich auf der Erdoberfläche angegeben ist, in dem sich die Sensoreinheit befindet (z.B. in Form eines Kreises mit einem definierten Radius).

In einer bevorzugten Ausführungsform weist das erfindungsgemäße System Mittel zur Bestimmung des Standorts der einen oder der mehreren Sensoreinheiten auf.

Denkbar ist, dass die Sensoreinheit über einen GPS-Sensor (GPS: *Global Positioning System*) oder einen anderen Sensor eines globalen Satellitennavigationssystems (GNSS) verfügt, mit dem der Standort der Sensoreinheit ermittelt werden kann.

Ein Vorteil der Standortbestimmung mittels eines globalen Satellitennavigationssystems ist die hohe Genauigkeit. Nachteile sind die vergleichsweise hohen Bauteilkosten und der vergleichsweise hohe Energiebedarf.

Denkbar ist auch, dass eine Standortbestimmung über die Funkzelle, mit der die Sendeeinheit der Sensoreinheit verbunden ist, erfolgt. Eine solche Lösung weist üblicherweise eine geringere Genauigkeit bei der Standortbestimmung auf, bedeutet aber geringere Bauteilkosten und einen geringeren Energiebedarf.

Im Mobilfunk beruht die einfachste Art der Standortbestimmung darauf, dass die Zelle, in der sich eine Sendeeinheit befindet, bekannt ist. Da ein eingeschaltetes Mobilfunktelefon mit einer Basisstation in Verbindung steht, lässt sich die Position des Mobilfunktelefons zumindest einer Mobilfunkzelle (Cell-ID) zuweisen.

Mit Hilfe von GSM (*Global System for Mobile Communications*) kann der Standort einer Sendeeinheit auf mehrere hundert Meter genau bestimmt werden. In Städten kann der Standort auf 100 bis 500 m genau bestimmt werden; in ländlichen Gegenden erhöht sich der Radius auf 10 km oder mehr. Wird die Information über die Cell-ID mit dem TA-Parameter (TA: *Timing Advance*) kombiniert, dann kann die Genauigkeit erhöht werden. Je höher dieser Wert ist, desto weiter weg ist die Sendeeinheit von der Basisstation. Mit dem EOTD-Verfahen (EOTD: *Enhanced Observed Time Difference*) lässt sich eine Sendeeinheit noch genauer orten. Dabei werden die Laufzeitunterschiede der Signale zwischen der Sendeinheit und mehreren Empfangseinheiten bestimmt.

In einer bevorzugten Ausführungsform erfolgen die Übermittlung der Temperaturwerte und die Standortbestimmung über das Sigfox-Netz. Sigfox ist ein Low Power Wide Area Network (LPWAN) und speziell auf kleine Datenpakete und einen sehr stromsparenden Betrieb ausgelegt. Sigfox-Basisstationen können über weite Entfernungen kommunizieren, ohne von Störungen beeinträchtigt zu werden. Die Reichweite einer einzelnen Basisstation, die bis zu einer Million Sendeeinheiten verwalten kann, beträgt 3 bis 5 km in Ballungszentren und 30 bis 70 km in ländlichen Gebieten. Bei Sigfox werden die Datenpakete von allen Basisstationen im Sendebereich empfangen. Darüber lässt sich die Position einer Sendeeinheit bestimmen.

Denkbar ist auch, dass der Standort einer Sensoreinheit bei ihrer Registrierung erfasst wird. Denkbar ist zum Beispiel, dass die Sensoreinheit an einem Standort aufgestellt und ein zugehöriger Temperatursensor der Sensoreinheit in den Boden an dem Standort eingebracht wird.

Ein Schritt der Registrierung besteht in der Verknüpfung von Sensoreinheit und Standort. Es ist denkbar, dass ein Nutzer mittels eines (mobilen) Computersystems die eindeutige Kennung der Sensoreinheit erfasst und mit Standortinformationen verknüpft. Die Erfassung der eindeutigen Kennung kann beispielsweise durch Eingabe über ein Eingabemittel (z.B. eine Tastatur, ein Touchscreen, eine Maus, ein Mikrofon (per Spracheingabe) oder dergleichen) erfolgen. Vorzugsweise ist die eindeutige Kennung in Form eines optisch lesbaren Codes (z.B. ein Strichcode oder ein Matrixcode oder dergleichen) oder in Form eines mittels Funk auslesbaren elektronischen Speichers (z.B. als RFID-Tag) oder dergleichen vorhanden. Dies hat den Vorteil, dass die eindeutige Kennung automatisch ausgelesen werden kann und Eingabefehler (wie beim Eintippen über eine Tastatur durch einen Nutzer) vermieden werden. Der optische Code kann dabei beispielsweise mit einer Kamera, die Bestandteil des (mobilen) Computersystems sein kann, erfasst werden. In einem weiteren Schritt wird der Standort bestimmt. Dabei ist es denkbar, dass die Mittel zur Standortbestimmung durch das (mobile) Computersystem des Nutzers bereitgestellt werden. Das mobile Computersystem kann beispielsweise ein Smartphone sein, mit dem der Standort über die Funkzelle, mit der das Smartphone verbunden ist, oder über einen zum Smartphone gehörigen GPS-Sensor bestimmt werden kann.

Sind die eindeutige Kennung erfasst und der Standort bestimmt, können diese Informationen miteinander verknüpft werden. Durch die Verknüpfung ist der Sensoreinheit ein Standort zugeordnet. Es ist denkbar, dass die verknüpften Informationen über ein Netzwerk an ein externes Computersystem übermittelt und dort gespeichert werden. Denkbar ist auch, dass die verknüpften Informationen auf dem (mobilen) Computersystem des Nutzers gespeichert werden.

Vorzugsweise erfolgt bei der Registrierung zusätzlich eine Verknüpfung der eindeutigen Kennung der Sensoreinheit mit einer eindeutigen Kennung des Nutzers, so dass dem Nutzer eine individuelle Sensoreinheit (oder mehrere Sensoreinheiten) mit einem definierten Standort zugeordnet ist. Vorzugsweise kann der Nutzer infolge dieser Verknüpfung nur Temperaturwerte von der ihm zugeordneten Sensoreinheit erfassen bzw. auf Informationen zugreifen, die auf Temperaturwerten basieren, die durch die ihm zugeordnete Sensoreinheit erfasst worden sind.

Ab der Inbetriebnahme erfasst die Sensoreinheit mit Hilfe des Temperatursensors Temperaturwerte und übermittelt diese mittels der Sendeeinheit an ein externes Computersystem. Dabei können die Temperaturwerterfassung und/oder die Temperaturwertübermittlung regelmäßig oder unregelmäßig erfolgen. Vorzugsweise wird die Temperatur mehrfach am Tag (inklusive der Nacht) gemessen; vorzugsweise einmal pro Stunde. Die Übermittlung der Temperaturwerte kann unmittelbar nach Erfassen eines Temperaturwerts erfolgen; denkbar ist aber auch, dass die in einem definierten Zeitraum erfassten Temperaturwerte gemeinsam übermittelt werden. Vorzugsweise werden mindestens einmal am Tag Temperaturwerte übermittelt.

Den einzelnen Temperaturwerten sind vorzugsweise Zeitpunkte zugeordnet, zu denen sie erfasst worden sind (Messzeitpunkte). Diese Zuordnung kann bei der Erfassung erfolgen oder zu einem späteren Zeitpunkt. Sie kann vor oder nach der Übermittlung erfolgen. In einer Ausführungsform der vorliegenden Erfindung wird ein Temperaturwert erfasst, der jeweilige Messzeitpunkt bestimmt und der erfasste Temperaturwert mit dem bestimmten Messzeitpunkt verknüpft. Die verknüpften Daten können dann zusammen übermittelt werden. In einer anderen Ausführungsform wird ein Temperaturwert erfasst und übermittelt. Die Verknüpfung mit einem Messzeitpunkt erfolgt auf dem externen Computersystem. Als Näherungswerte für die Messzeitpunkte können dann beispielsweise die Ankunftszeiten der übermittelten Datenpakete verwendet werden. Weitere Möglichkeiten sind denkbar.

Auf dem externen Computersystem erfolgt eine Modellierung der Entwicklung von Nematoden auf Basis der übermittelten Temperaturwerte und der zugehörigen Messzeitpunkte. Vorzugsweise sind auf dem externen Computersystem mehrere Modelle implementiert, die verschiedene Entwicklungen modellieren. Unter dem Begriff "Entwicklung von Nematoden" wird jede zeitliche Veränderung der Menge an Nematoden in einem oder mehreren Nematodenstadien verstanden. In einer Ausführungsform wird unter dem Begriff "Entwicklung von Nematoden" insbesondere das vollständige oder teilweise Durchlaufen eines oder mehrerer Lebenszyklen verstanden.

Ein bevorzugtes Modell berechnet den Grad des Abschlusses einer Nematodengeneration (Modellierung des Lebenszyklus von Nematoden, kurz: Lebenszyklusmodell). In einer bevorzugten Ausführungsform bestimmt das Modell, wann ein lokales Maximum der Menge an Nematoden in einem bestimmten Nematodenstadium erreicht wird, für das ein Bekämpfungsmittel besonders effizient wirkt (bekämpfbares Nematodenstadium).

Dies sei an einem Beispiel erläutert: Der Schimmelpilz *Paecilomyces lilacinus* wirkt besonders gegen Nematodeneier. Um Nematoden effizient zu bekämpfen, sollte ein Nematizid auf Basis von *Paecilomyces lilacinus* daher dann appliziert werden, wenn die Menge an Nematodeneiern ein lokales Maxium aufweist. Das Modell kann daher ermitteln, wann dieses Maximum erreicht wird.

Die Modellierung des Lebenszyklus von Nematoden erfolgt in einer Ausführungsform der vorliegenden Erfindung ausschließlich auf Basis von Wärmesummen. In die Berechnung einer solchen Wärmesumme fließt neben den erfassten Temperaturwerten und den Messzeitpunkten noch eine Mindesttemperatur ein. Nur wenn die erfasste Temperatur oberhalb der Mindesttemperatur liegt, findet eine Entwicklung der Nematoden statt. Für die Berechnung der Wärmesummen gibt es zahlreiche Methoden, die in der Literatur beschrieben sind (siehe z.B. http://ipm.ucanr.edu/WEATHER/ddconcepts.html).

Die Mindesttemperatur kann experimentell bestimmt werden (siehe z.B. A. Giné et al.: Thermal requirements and population dynamics of root-knot nematodes on cucumber and yield losses under protected cultivation, Plant Pathology (2014) 63, 1446-1453; M. López-Gómez et al.: Damage functions and thermal requirements of Meloidogyne javanica and Meloidogyne incognita on watermelon, Annals of Applied Biology ISSN 0003-4746, doi:10.1111/aab.12154; Maria Dolores Vela et al.: Thermal time requirements of root-knot nematodes on zucchini-squash and population dynamics with associated yield losses on spring and autumn cropping cycles, Eur J Plant Pathol (2014) 140:481-490, DOI 10.1007/s10658-014-0482-x).

Vorzugsweise wird das Modell (Lebenszyklusmodell) gestartet, wenn ein lokales Maximum der Menge an Nematoden in einem bekämpfbaren Nematodenstadium vorliegt. In einer bevorzugten Ausführungsform erfolgt der Start des Modells zu dem Zeitpunkt, zu dem Kulturpflanzen in dem Boden, dessen Temperatur überwacht wird, eingepflanzt werden. Dies ist üblicherweise der Zeitpunkt, zu dem eine neue Generation von Nematoden beginnend mit Nematodeneiern heranreift.

Das Modell kann nun so konfiguriert sein, dass es auf Basis der übermittelten Temperaturwerte und der Messzeitpunkte fortwährend die Wärmesumme (temperaturabhängiger Entwicklungsparameter) berechnet und diese mit einer definierten Wärmesumme (definierter Zielparameter) vergleicht. Die definierte Wärmesumme ist vorzugsweise diejenige Wärmesumme, die erforderlich ist, um eine Generation von Nematoden beginnend mit einem bekämpfbaren Nematodenstadium (z.B. Nematodeneiern) einmal zu durchlaufen. Ist eine Generation durchlaufen wird (erneut) ein lokales Maximum der Menge an Nematoden in dem bekämpfbaren Nematodenstadium erreicht. Dies ist ein guter Zeitpunkt zur Applikation eines Bekämpfungsmittels, das die Nematoden im bekämpfbaren Nematodenstadium wirksam bekämpft. Erfindungsgemäß wird zu diesem Zeitpunkt eine Mitteilung erzeugt. Diese Mitteilung kann zum Inhalt haben, dass eine neue Generation durchlaufen worden ist. Sie kann zum Inhalt haben, dass ein lokales Maximum in der Menge von Nematoden in dem bekämpfbaren Nematodenstadium erreicht worden ist. Sie kann zum Inhalt haben, dass nun eine Applikation eines Bekämpfungsmittels gegen Nematoden in dem bekämpfbaren Nematodenstadium erfolgen sollte.

Für das Modell können neben den Temperaturwerten und den dazugehörigen Messzeitpunkten weitere Parameter genutzt werden, wie beispielsweise die Nematodenart, Informationen zur Bodenart, zur Bodenfeuchte, zur Art der angebauten Kulturpflanze und dergleichen. Es ist denkbar, dass der Nutzer des erfindungsgemäßen Computerprogrammprodukts derartige Parameter in das Computerprogramm eingibt und/oder dass derartige Parameter aus einer Datenbank ausgelesen werden. Es ist denkbar, dass in einer solchen Datenbank für eine Vielzahl an Standorten und/oder Regionen derartige Parameter hinterlegt sind. Es ist denkbar, dass ein oder mehrere der Parameter aus der Datenbank ausgelesen werden, nachdem der Standort der Sensoreinheit bestimmt und mit dieser verknüpft worden ist. Es ist denkbar, dass ein oder mehrere der Parameter durch einen oder mehrere weitere Sensoren erfasst werden (z.B. Sensoren für Feuchtigkeit, Luftdruck, elektrische oder thermische Leitfähigkeit des Bodens, Bewegungen im Boden, chemische Zusammensetzung von Luft und/oder Boden und/oder dergleichen).

Das erfindungsgemäße Computerprogramm informiert den Nutzer, wenn der temperaturabhängige Entwicklungsparameter den definierten Zielparameter erreicht hat.

In einer bevorzugten Ausführungsform wird der Nutzer des erfindungsgemäßen Computerprogramms bereits vor Erreichen des definierten Zielparameters darüber informiert, dass sich der temperaturabhängige Entwicklungsparameter dem definierten Zielparameter nähert, so dass der Nutzer Vorbereitungen treffen kann. Es ist zum Beispiel denkbar, dass der Nutzer zu einem oder mehreren definierten Werten des Verhältnisses von temperaturabhängigem Entwicklungsparameter zu definiertem Zielparameter eine oder mehrere Mitteilungen übermittelt bekommt, zum Beispiel, wenn der temperaturabhängige Entwicklungsparameter 80% und/oder 90% und/oder 95% oder einen anderen prozentualen Anteil des definierten Zielparameters erreicht hat.

In einer bevorzugten Ausführungsform wird dem Nutzer der Fortschritt des temperaturabhängigen Entwicklungsparameters auf einem Bildschirm des erfindungsgemäßen Systems fortwährend angezeigt, zum Beispiel in Form eines Fortschrittsbalkens.

Mitteilungen über das Erreichen des Zielparameters und/oder weitere Mitteilungen können dem Nutzer zum Beispiel über einen Bildschirm angezeigt und/oder über einen Lautsprecher per Sprachnachricht übermittelt werden. Denkbar ist auch, dass der Nutzer durch ein Signal (z.B. einen Ton oder einen Vibrationsalarm) auf eine neue Mitteilung aufmerksam gemacht wird, die dann auf einem Bildschirm als Textnachricht ggf. zusammen mit grafischen Elementen angezeigt wird. Denkbar ist aber auch, dass der Nutzer aktiv eine Mitteilung abruft, beispielsweise, indem er das erfindungsgemäße Computerprogramm startet.

Bevorzugte Ausführungsformen der vorliegenden Erfindung sind:
1. Verfahren zur Bekämpfung von Nematoden in einem Boden umfassend die Schritte: Installieren eines Temperatursensors in dem Boden; Bereitstellen eines Modells der temperaturabhängigen Entwicklung von Nematoden; Messen von Temperaturwerten in dem Boden zu Messzeitpunkten; Verknüpfen der Temperaturwerte mit den Messzeitpunkten; Berechnen einer Wärmesumme auf Basis der Temperaturwerte und der Messzeitpunkte mit Hilfe des Modells; Vergleichen des temperaturabhängigen Entwicklungsparameters mit einem definierten Zielparameter; Ausgeben einer Mitteilung für den Fall, dass der temperaturabhängige Entwicklungsparameter den definierten Zielparameter erreicht;
   Applizieren eines Bekämpfungsmittels gegen Nematoden in dem bekämpfbaren Nematodenstadium.
2. Verfahren gemäß Ausführungsform 1, wobei es sich bei dem Modell der temperaturabhängigen Entwicklung von Nematoden um ein Modell handelt, das die Entwicklung von Nematoden von einer Generation eines bekämpfbaren Nematodenstadiums zur nächsten Generation des bekämpfbaren Nematodenstadiums modelliert.
4. Verfahren gemäß Ausführungsform 1, wobei es sich bei dem definierten Zielparameter um eine Wärmesumme handelt, die nötig ist, damit eine Generation von Nematoden durchlaufen wird.
5. Verfahren gemäß einer der Ausführungsformen 1 bis 4, umfassend die folgenden Schritte:
   Bereitstellen einer Sensoreinheit umfassend einen Temperatursensor; Einbringen des Temperatursensors in einen Boden; Inbetriebnehmen der Sensoreinheit; Ermitteln des Standorts der Sensoreinheit; Ermitteln von standortabhängigen weiteren Parametern wie beispielsweise vorhandene Nematodenart, Informationen zur Bodenart, zur Bodenfeuchte, zur Art der angebauten Kulturpflanze; Modellieren der Entwicklung von Nematoden auf Basis der Temperaturwerte, der Messzeitpunkte und einem oder mehreren der standortabhängigen weiteren Parameter.
6. Verfahren gemäß einer der Ausführungsformen 1 bis 5, umfassend die folgenden Schritte:
   Bereitstellen einer Sensoreinheit umfassend einen Temperatursensor; Einbringen des Temperatursensors in einen Boden; Inbetriebnehmen der Sensoreinheit; Ermitteln des Standorts der Sensoreinheit; Ermitteln einer eindeutigen Kennung der Sensoreinheit; Verknüpfen des Standorts der Sensoreinheit mit der eindeutigen Kennung; Ermitteln von Nutzerdaten; Verknüpfen der Nutzerdaten mit der eindeutigen Kennung der Sensoreinheit; Anzeigen des Standorts der Sensoreinheit auf einem Bildschirm des Nutzers.
7. Verfahren gemäß einer der Ausführungsformen 1 bis 6, umfassend die folgenden Schritte:
   Bereitstellen einer Sensoreinheit umfassend einen Temperatursensor; Einbringen des Temperatursensors in einen Boden; Inbetriebnehmen der Sensoreinheit; Ermitteln einer eindeutigen Kennung der Sensoreinheit; Ermitteln von Nutzerdaten; Verknüpfen der Nutzerdaten mit der eindeutigen Kennung der Sensoreinheit; Anzeigen des Standorts der Sensoreinheit und/oder Anzeigen von Temperaturwerten, die mit der Sensoreinheit erfasst werden, und/oder Anzeigen eines Ergebnisses der Modellierung der Entwicklung von Nematoden, das auf den Temperaturwerten basiert, die mit der Sensoreinheit erfasst werden, auf einem Bildschirm des Nutzers.
8. Verfahren gemäß einer der Ausführungsformen 1 bis 7, umfassend den Schritt: Applizieren eines Nematizids auf Basis des Schimmelpilzes *Paecilomyces lilacinus* gegen Nematodeneier.
9. System umfassend eine Sensoreinheit mit einem Temperatursensor und einer Sendeeinheit, und ein Computersystem mit einer Empfangseinheit und ein Applikationssystem; wobei die Sensoreinheit konfiguriert ist,
   Temperaturwerte mit dem Temperatursensor zu Messzeitpunkten zu erfassen; wobei die Sensoreinheit konfiguriert ist, die Temperaturwerte mit der Sendeeinheit zu versenden; wobei das Computersystem konfiguriert ist, die Temperaturwerte mit der Empfangseinheit zu empfangen; wobei das Computersystem konfiguriert ist, auf Basis der empfangenen Temperaturwerte und der Messzeitpunkte mit Hilfe eines Modells der temperaturabhängigen Entwicklung von Nematoden einen temperaturabhängigen Entwicklungsparameter zu berechnen und diesen mit einem definierten Zielparameter zu vergleichen,
   wobei das Modell das vollständige oder teilweise Durchlaufen eines oder mehrerer Lebenszyklen der Nematoden modelliert,
   wobei es sich bei dem temperaturabhängigen Entwicklungsparameter um eine Wärmesumme handelt, wobei es sich bei dem Zielparameter um diejenige Wärmesumme handelt, die erforderlich ist, um ein lokales Maximum der Menge an Nematoden in einem bekämpfbaren Nematodenstadium zu erreichen;
   wobei das Computersystem konfiguriert ist, eine Mitteilung zu erzeugen, wenn der temperaturabhängige Entwicklungsparameter den definierten Zielparameter erreicht, wobei die Mitteilung die Aufforderung enthält, dass eine Applikation eines Bekämpfungsmittels gegen Nematoden in dem bekämpfbaren Nematodenstadium erfolgen sollte, und das Applikationssystem ein Bekämpfungsmittel gegen Nematoden in dem bekämpfbaren Nematodenstadium appliziert.
10. System gemäß der Ausführungsform 9, umfassend ein erstes Computersystem, und ein zweites Computersystem; wobei das erste Computersystem konfiguriert ist, Temperaturwerte und Messzeitpunkte zu empfangen, einen temperaturabhängigen Entwicklungsparameter zu berechnen, den berechneten temperaturabhängigen Entwicklungsparameter mit einem definierten Zielparameter zu vergleichen und dann eine Mitteilung an das zweite Computersystem zu übermitteln, wenn der temperaturabhängige Entwicklungsparameter den definierten Zielparameter erreicht; wobei das zweite Computersystem konfiguriert ist, die Mitteilung zu empfangen und gegenüber einem Nutzer anzuzeigen.
11. System gemäß einer der Ausführungsformen 9 oder 10, umfassend Mittel zur Verknüpfung der Sensoreinheit mit einem Nutzer; wobei das Computersystem konfiguriert ist, dem Nutzer ausschließlich solche Informationen anzuzeigen, die auf Temperaturwerten basieren, die mit der mit dem Nutzer verknüpften Sensoreinheit erfasst werden.
12. System gemäß einer der Ausführungsformen 9 bis 11, umfassend Mittel zur Bestimmung des Standorts der Sensoreinheit; eine eindeutige Kennung, anhand derer die Sensoreinheit identifizierbar ist; Mittel zur Verknüpfung des Standorts der Sensoreinheit mit der eindeutigen Kennung.
13. Computerprogrammprodukt umfassend einen Programmcode, der auf einem Datenträger gespeichert ist, und der ein Computersystem umfassend einen Arbeitsspeicher veranlasst, die folgenden Schritte auszuführen, wenn der Programmcode in den Arbeitsspeicher geladen ist: Empfangen von Temperaturwerten, die zu Messzeitpunkten erfasst worden sind; Berechnen eines temperaturabhängigen Entwicklungsparameters auf Basis der empfangenen Temperaturwerte und der Messzeitpunkte mit Hilfe eines Modells der temperaturabhängigen Entwicklung von Nematoden, wobei das Modell das vollständige oder teilweise Durchlaufen eines oder mehrerer Lebenszyklen der Nematoden modelliert, wobei es sich bei dem temperaturabhängigen Entwicklungsparameter um eine Wärmesumme handelt; Vergleichen des berechneten temperaturabhängigen Entwicklungsparameters mit einem definierten Zielparameter, wobei es sich bei dem Zielparameter um diejenige Wärmesumme handelt, die erforderlich ist, um ein lokales Maximum der Menge an Nematoden in dem bekämpfbaren Nematodenstadium zu erreichen; Erzeugen einer Mitteilung an das Applikationssystem, wenn der temperaturabhängige Entwicklungsparameter den definierten Zielparameter erreicht, womit das Applikationssystem ein Bekämpfungsmittel gegen Nematoden in dem bekämpfbaren Nematodenstadium appliziert.

Die Erfindung wird nachfolgend anhand von Figuren und Beispielen näher erläutert, ohne die Erfindung auf die Merkmale und Merkmalskombinationen der Figuren und Beispiele beschränken zu wollen. Jegliche Figuren oder Beispiele, die nicht unter den in den Ansprüchen definierten Gegenstand fallen, sind dabei zur Illustration einzelner Teilbereiche der Erfindung oder als Referenzbeispiele, aber nicht als eigenständige Erfindungsgegenstände zu sehen.

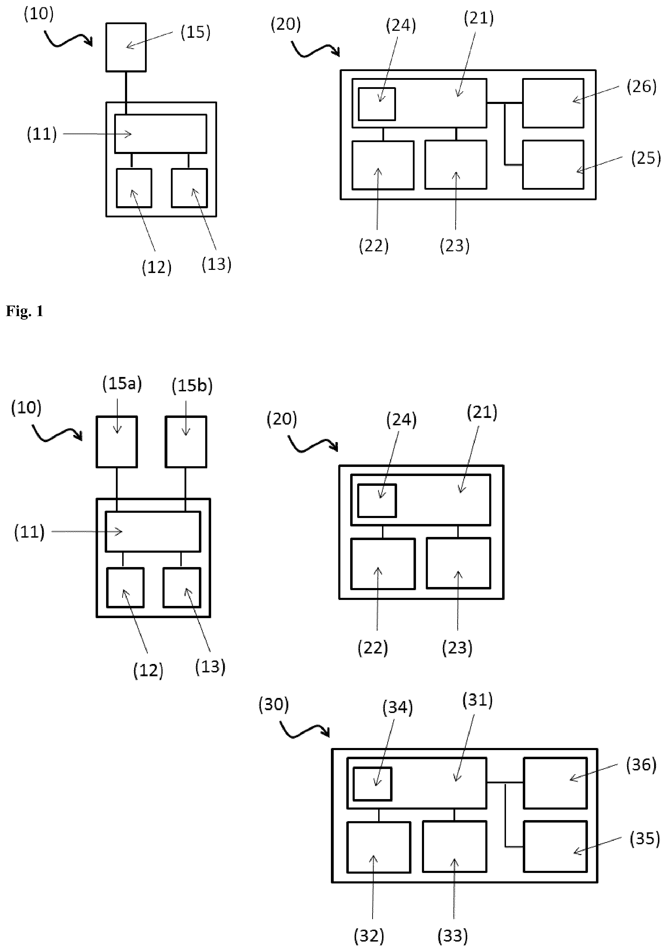

Figur 1 zeigt schematisch eine Ausführungsform des erfindungsgemäßen Systems. Das System umfasst eine Sensoreinheit (10) und ein Computersystem (20).

Die Sensoreinheit (10) umfasst eine Steuereinheit (11) zur Steuerung der Sensoreinheit (10). Die Steuereinheit (11) steuert zum Beispiel die Messwerterfassung, die Verknüpfung der Messwerte mit den Messzeitpunkten und die Übermittelung von Daten.

Die Sensoreinheit (10) umfasst einen Zeitmesser (13), mit dem die aktuelle Zeit (Datum, Uhrzeit) ermittelt werden kann.

Die Sensoreinheit (10) umfasst einen Temperatursensor (15), mit dem die Sensoreinheit (10) zu Messzeitpunkten Temperaturen messen kann. Die Steuereinheit (11) verknüpft die gemessenen Temperaturwerte mit den dazugehörigen Messzeitpunkten. Die Sensoreinheit (10) umfasst ferner eine Sendeeinheit (12), mit der die gemessenen Temperaturen und die dazugehörigen Messzeitpunkte an das Computersystem (20) übermittelt werden können.

Das Computersystem (20) umfasst eine Steuer- und Recheneinheit (21) zur Steuerung des Computersystems (20) und zur Durchführung von Berechnungen. Das Computersystem (20) umfasst eine Empfangseinheit (22), mit der Temperaturwerte und die dazugehörigen Messzeitpunkte, die von der Sendeeinheit (12) übermittelt werden, empfangen werden können. Das Computersystem (20) weist einen Permanentspeicher (23) auf, in dem Daten wie beispielsweise ein oder mehrere definierte Zielparameter und ein oder mehrere Modelle zur Entwicklung von Nematoden gespeichert sind. Bestandteil der Steuer- und Recheneinheit (21) ist ein Arbeitsspeicher (24), in den Daten und Modelle aus dem Permanentspeicher (23) sowie die übermittelten Temperaturwerte und Messzeitpunkte geladen werden können. Auf Basis der Daten und der übermittelten Werte berechnet die Steuereinheit anhand eines Modells einen temperaturabhängigen Entwicklungsparameter und vergleicht diesen mit einem Zielparameter. Erreicht der Entwicklungsparameter den Zielparameter erzeugt die Steuer- und Recheneinheit (21) eine Mitteilung. Diese Mitteilung kann über eine Ausgabeeinheit (26) gegenüber einem Nutzer ausgegeben werden. Die Ausgabeeinheit (26) weist dazu ein oder mehrere Ausgabemittel auf, wie beispielsweise einen Bildschirm, einen Drucker, einen Permanentspeicher, einen Lautsprecher, eine Verbindung zu einem weiteren Computersystem und/oder dergleichen.

Ein weiterer Bestandteil des Computersystems (20) ist eine Eingabeeinheit (25), über die ein Nutzer Daten und Befehle eingeben kann. Die Eingabeeinheit (25) weist ein oder mehrere Eingabemittel auf, wie beispielsweise eine Maus, einen Touchscreen, eine Tastatur, ein Mikrofon und/oder dergleichen. Die Ausgabeeinheit (25) und die Eingabeeinheit (26) dienen der Kommunikation des Computersystems (20) mit einem Nutzer.

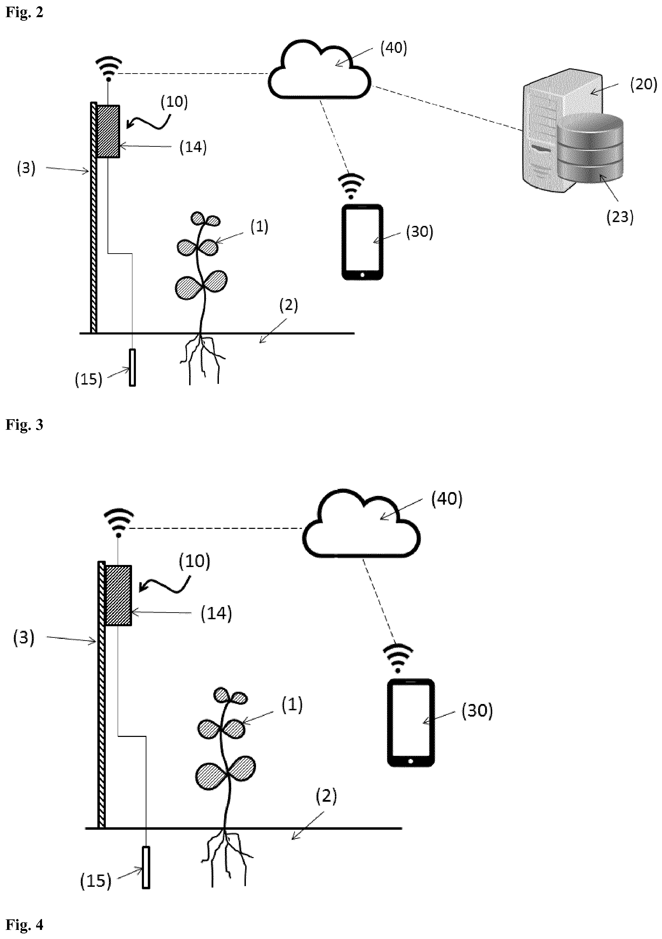

Figur 2 zeigt schematisch eine weitere Ausführungsform des erfindungsgemäßen Systems. Das System umfasst eine Sensoreinheit (10), ein erstes Computersystem (20) und ein zweites Computersystem (30).

Die Sensoreinheit (10) umfasst zwei Temperatursensoren (15a, 15b), die die Temperaturen an unterschiedlichen Stellen im Boden messen können. Es ist zum Beispiel denkbar, dass ein Temperatursensor im Freiland installiert ist und der andere in einem Gewächshaus. Die Verwendung von mehr als einem Temperatursensor hat den Vorteil, dass für verschiedene Stellen die individuelle Temperaturentwicklung über den Tag verfolgt werden kann und damit für verschiedene Stellen eine individuelle Modellierung der Entwicklung von Nematoden erfolgen kann.

Die Sensoreinheit (10) in Figur 2 umfasst ferner, wie bereits die Sensoreinheit in Figur 1, eine Steuereinheit (11), eine Sendeeinheit (12) und einen Zeitmesser (13).

Das erste Computersystem (20) dient der Modellierung der Entwicklung der Nematoden; es ist vorzugsweise als stationäres Computersystem (Server) ausgeführt. Das zweite Computersystem (30) dient der Kommunikation mit einem Nutzer (Client). Es kann als stationäres und/oder mobiles Computersystem (30) ausgeführt sein.

Das erste Computersystem (20) empfängt die von der Sendeinheit (12) übermittelten Temperaturwerte und die dazugehörigen Messzeitpunkte mit Hilfe einer Empfangseinheit (22). In einen Arbeitsspeicher (24) der Steuer- und Recheneinheit (21) ist ein Modell geladen, das die Entwicklung von Nematoden modelliert. Das Computersystem (20) ist so konfiguriert, dass es auf Basis der empfangenen Werte einen temperaturabhängigen Entwicklungsparameter berechnet und diesen mit einem definierten Zielparameter vergleicht. Das Computersystem (20) ist ferner so konfiguriert, dass es eine Mitteilung erzeugt, wenn der temperaturabhängige Entwicklungsparameter den definierten Zielparameter erreicht. Das Computersystem (20) ist ferner so konfiguriert, dass es die Mitteilung über eine Sendeeinheit an das zweite Computersystem (30) übermittelt.

Das zweite Computersystem (30) empfängt die Mitteilung mit Hilfe der Empfangseinheit (32). Über die Ausgabeeinheit (36) kann die Mitteilung gegenüber einem Nutzer ausgegeben werden, zum Beispiel durch eine Anzeige auf einem Bildschirm. Das zweite Computersystem (30) verfügt ferner über eine Eingabeeinheit (35), eine Steuer- und Recheneinheit (31) mit einem Arbeitsspeicher (34) und über einen Permanentspeicher (33).

Figur 3 zeigt eine weitere Ausführungsform des erfindungsgemäßen Systems. Das System umfasst eine Sensoreinheit (10) mit einem Temperatursensor (15), der in einen Boden (2) eingebracht ist. In dem Boden sind Kulturpflanzen (1) gepflanzt, die von Nematoden befallen sein können. Die Sensoreinheit (10) weist ein Gehäuse (14) mit Bedienteil auf. In das Gehäuse (14) sind eine Sendeeinheit und eine Steuereinheit eingebracht (nicht gezeigt). Das Gehäuse (14) ist an einer Befestigungseinheit (3) angebracht. Das Gehäuse (14) mit Bedienteil ist gegenüber dem Boden (2) erhöht angebracht, so dass ein Nutzer das Gerät einfacher bedienen kann. Es ist denkbar, eine Überdachung anzubringen, um das Gehäuse vor Niederschlägen und/oder vor direkter Sonneneinstrahlung zu schützen. Das System umfasst ferner ein externes Computersystem (20), das als Server ausgeführt ist. Das externe Computersystem (20) ist mit einer Datenbank (23) verbunden. Das System umfasst ferner ein zweites Computersystem (30), das als Smartphone ausgeführt ist. Die Sensoreinheit (10), das erste Computersystem (20) und das zweite Computersystem (30) sind über ein Netzwerk (40) miteinander verbunden. Temperaturwerte und Messzeitpunkte werden über das Netzwerk (40) von der Sensoreinheit an das erste Computersystem (30) übermittelt. Dort finden eine Analyse der Werte und eine Modellierung der Entwicklung der Nematoden statt. Die Ergebnisse der Analyse und Modellierung werden über das Netzwerk (40) an das zweite Computersystem (30) übermittelt. Denkbar ist auch, dass die Sensoreinheit (10) und das erste Computersystem (30) über ein erstes Netzwerk miteinander verbunden sind, während das zweite Computersystem (30) und das erste Computersystem (20) über ein anderes, zweites Netzwerk miteinander kommunizieren. Figur 4 zeigt eine weitere Ausführungsform des erfindungsgemäßen Systems. Im Gegensatz zu der in Figur 3 gezeigten Ausführungsform weist das in Figur 4 gezeigte System nur ein Computersystem (30) auf, das als Smartphone ausgeführt ist (das aber auch als Table-Computer, Desktop-Computer, Smartwatch oder dergleichen ausgeführt sein kann). Das Computersystem (30) empfängt die von der Sensoreinheit (10) erfassten und übermittelten Werte, modelliert die Entwicklung der Nematoden und zeigt das Ergebnis der Modellierung vorzugsweise auf einem Bildschirm an.

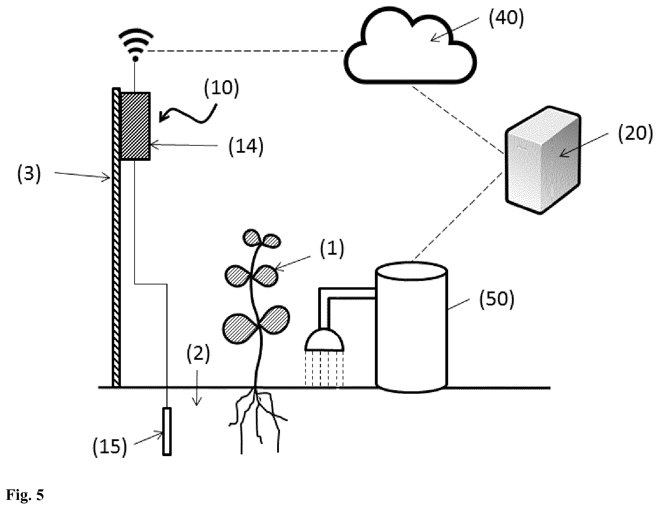

Figur 5 zeigt eine weitere Ausführungsform des erfindungsgemäßen Systems. Das System umfasst eine Sensoreinheit (10), ein Computersystem (20) und ein Applikationssystem (50). Temperaturwerte und Messzeitpunkte werden von der Sensoreinheit (10) über ein Netzwerk (40) an das Computersystem (20) übermittelt. Auf Basis der übermittelten Werte modelliert das Computersystem (20) die Entwicklung der Nematoden; insbesondere berechnet das Computersystem (20) einen temperaturabhängigen Entwicklungsparameter und vergleicht diesen mit einem definierten Zielparameter. Erreicht der Entwicklungsparameter den Zielparameter, erzeugt das Computersystem (20) eine Mitteilung und sendet diese an das Applikationssystem (50). Das Applikationssystem (50) appliziert ein Bekämpfungsmittel zur Bekämpfung der Nematoden.

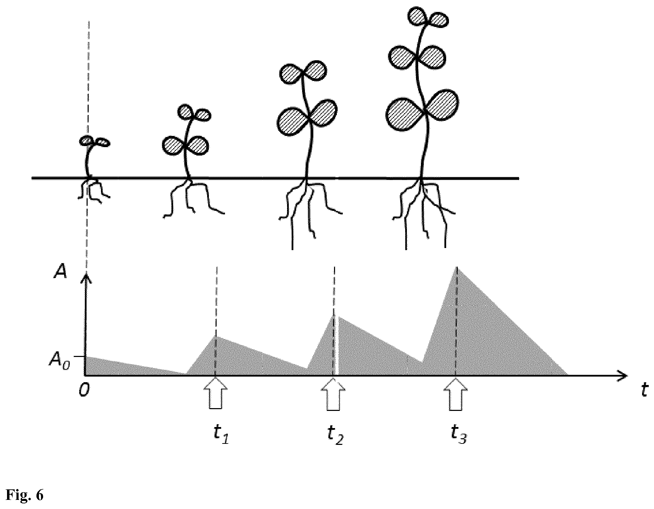

Figur 6 zeigt schematisch die Entwicklung von Nematoden am Beispiel der Menge (A) an Nematodeneiern als Funktion der Zeit (*t*). Die Entwicklung startet im vorliegenden Beispiel zum Zeitpunkt *t* = 0, nachdem Kulturpflanzen in den Boden eingepflanzt worden sind ("Aktivierung"). Zum Zeitpunkt *t =* 0 liegt eine Menge *A₀* an Nematodeneiern vor. Die Menge an Nematodeneiern nimmt zunächst mit der Zeit ab, da Larven schlüpfen. Die Nematoden durchlaufen eine Reihe von Stadien, bis ein Nematodenstadium erreicht ist, das neue Nematodeneier legt: die Menge an Nematodeneiern steigt. Zum Zeitpunkt *t* = *t*₁ wird ein lokales Maximum in der Menge an Nematoden im Stadium von Nematodeneiern erreicht. In der Zeit zwischen *t =* 0 und *t = t*₁ wird eine Generation durchlaufen. Danach nimmt die Menge an Nematodeneiern wieder ab.

Zu den Zeitpunkten *t = t*₂ und *t = t*₃ werden wiederum lokale Maxima in der Menge an Nematodeneiern erreicht. In der Zeit zwischen *t* = *t*₁ und *t = t*₂ wird eine weitere Generation durchlaufen; in der Zeit zwischen *t = t*₂ und *t* = *t*₃ wird ebenfalls eine weitere Generation durchlaufen. Die Zeitpunkte *t = t*₁*, t = t*₂ und *t = t*₃ sind Zeitpunkte, zu denen vorzugsweise ein Bekämpfungsmittel appliziert wird, das gegen Nematodeneier wirkt (z.B. ein Nematizid auf Basis des Schimmelpilzes *Paecilomyces lilacinus*).

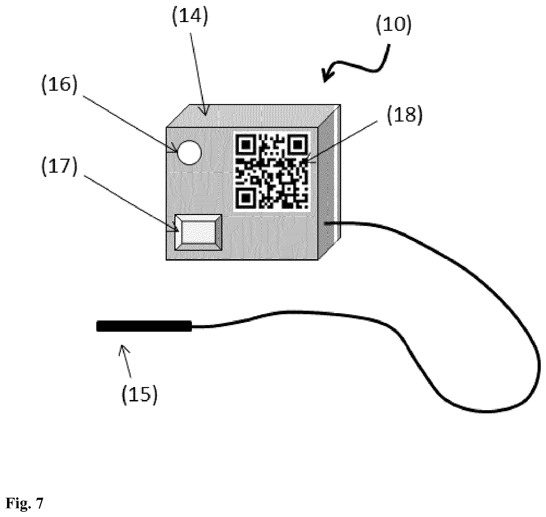

Figur 7 zeigt schematisch eine Ausführungsform einer Sensoreinheit (10). Die Sensoreinheit (10) weist ein Gehäuse (14) auf, in das eine Sendeeinheit und eine Steuereinheit eingebracht sind (nicht gezeigt). Die Sensoreinheit (10) umfasst einen Temperatursensor (15), der über eine Kabelverbindung mit der Steuereinheit verbunden ist. Ein Schalter (17) dient zum Ein- und Ausschalten der Sensoreinheit (10). Ein Signallämpchen (16) kann den Status der Sensoreinheit (10) anzeigen. Auf dem Gehäuse (14) befindet sich ein optisch lesbarer Code (18) mit einer eindeutigen Kennung.

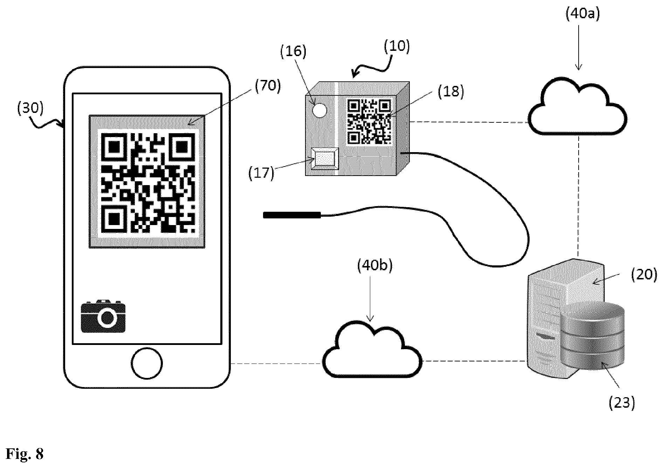

Figur 8 zeigt schematisch einen Registrierungsvorgang zur Registrierung einer neuen Sensoreinheit. Durch Drücken des Ein- und Ausschalters (17) wird die Sensoreinheit (10) in Betrieb genommen. Sie verbindet sich automatisch über ein Netzwerk (40a) mit einem Server (20) und übermittelt eine eindeutige Kennung, anhand der die Sensoreinheit (10) eindeutig identifiziert werden kann. Ferner wird der Standort der Sensoreinheit (10) automatisiert ermittelt; z.B. über einen GPS-Sensor, der Bestandteil der Sensoreinheit (10) sein kann, oder über die Funkzelle, in der sich die Sensoreinheit (10) befindet. Auch der Standort der Sensoreinheit (10) wird an den Server (20) übermittelt. Eindeutige Kennung und Standort werden zusammen in einer Datenbank (23) gespeichert. Das Signallämpchen (16) zeigt an, dass die Sensoreinheit (10) in Betrieb genommen worden ist und Standort und eindeutige Kennung übertragen worden sind. Fortan erfasst die Sensoreinheit Temperaturwerte und übermittelt sie zusammen mit den dazugehörigen Messzeitpunkten an den Server (20).

In einem weiteren Schritt erfolgt eine Verknüpfung der Sensoreinheit mit einem Nutzer. Die Verknüpfung mit dem Nutzer erfolgt im vorliegenden Fall mittels eines zweiten Computersystems (30), das als Smartphone ausgeführt ist. Der Nutzer startet das erfindungsgemäße Computerprogramm. Er wird aufgefordert, den optisch lesbaren Code (18) mit Hilfe der zum Smartphone gehörigen Kamera aufzunehmen; auf dem Bildschirm des Smartphone wird ein Live-Bild angezeigt. Der Nutzer hält die Kamera vor den optischen Code und erzeugt eine Bildaufnahme (70) von dem Code. Denkbar ist auch, dass die Bildaufnahme automatisch erzeugt wird, sobald das Smartphone erkannt hat, dass auf dem Sensorchip der Kamera ein optisch lesbarer Code abgebildet ist. Die Bildaufnahme (70) wird analysiert und der optisch lesbare Code wird interpretiert. Er umfasst die eindeutige Kennung. Das Smartphone sendet die eindeutige Kennung zusammen mit Nutzerdaten über ein Netzwerk (40b) an den Server (20). Der Server speichert die übersandten Informationen in der Datenbank (23) zu den bereits zur Sensoreinheit (10) gespeicherten Daten. Der Sensoreinheit sind nun ein Standort und ein Nutzer zugeordnet.

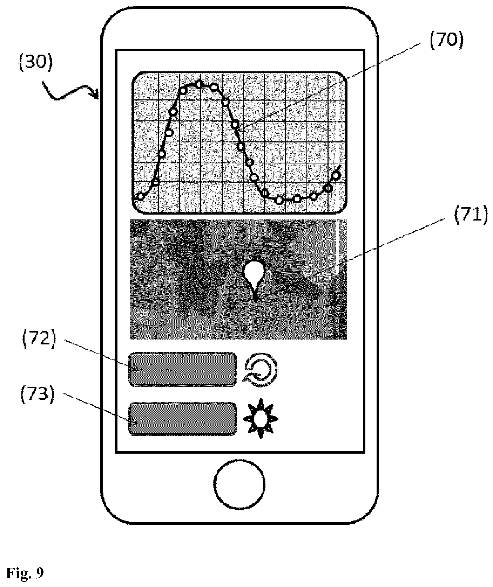

Figur 9 zeigt beispielhaft eine Bildschirmanzeige des als Smartphone ausgeführten zweiten Computersystems (30) im Betrieb nach der Registrierung. Im mittleren Bereich wird eine Übersichtskarte der Umgebung angezeigt, in der sich die Sensoreinheit befindet. Eine Markierung (71) kennzeichnet den Standort der Sensoreinheit. Im oberen Bereich wird die Temperatur (70), die mit der Sensoreinheit gemessen wird, als Funktion der Zeit angezeigt. Im vorliegenden Beispiel sind die einzelnen Temperaturwerte, die zu einzelnen Messzeitpunkten erfasst worden sind, als kleine Kreise angezeigt; eine Spline-Funktion verbindet die Punkte miteinander. Im unteren Bereich sind zwei virtuelle Schaltflächen angezeigt, mit denen verschiedene Modelle der Entwicklung von Nematoden gestartet werden können. Die obere Schaltfläche startet ein Modell zur Modellierung der Lebenszyklen der Nematoden; die untere Schaltfläche ein Modell zur thermischen Bekämpfung von Nematoden. Das erste Modell (Lebenszyklusmodell) wird vorzugsweise dann gestartet, wenn Kulturpflanzen in dem Boden gepflanzt worden sind. Das zweite Modell (Bekämpfungsmodell) wird vorzugsweise dann gestartet, wenn die thermische Behandlung gestartet wird (zum Beispiel Ausbringen von Solarisations-Kunststofffolien). Das zweite Modell (Bekämpfungsmodell ist näher in EP18171591.3 beschrieben.

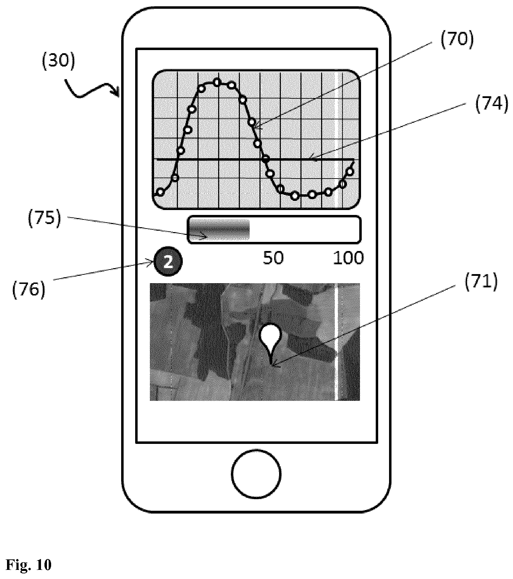

Figur 10 zeigt beispielhaft eine Bildschirmanzeige des als Smartphone ausgeführten zweiten Computersystems (30) im Betrieb nach der Registrierung und des Drückens einer der virtuellen Schaltflächen aus Figur 9. Es wird wie bereits in Figur 9 dargestellt eine Übersichtskarte der Umgebung der Sensoreinheit mit einer Markierung (71) des Standorts der Sensoreinheit angezeigt. Es wird wiederum die von der Sensoreinheit gemessene Temperatur (70) als Funktion der Zeit angezeigt. Zusätzlich ist die Mindesttemperatur (74) angezeigt, die erreicht werden muss, damit (a) eine Nematodenentwicklung stattfindet (im Fall des Lebenszyklusmodells) oder (b) Nematoden erfolgreich thermisch bekämpft werden (im Fall des Bekämpfungsmodells). Ein Fortschrittsbalken (75) zeigt an, zu welchem prozentualen Anteil der temperaturabhängige Entwicklungsparameter den definierten Zielparameter bereits erreicht hat (im vorliegenden Beispiel sind es etwa 30%). Es ist denkbar, dass sich die Farbe des Fortschrittbalkens ändert, wenn sich der Balken dem Wert von 100% nähert. Denkbar ist zum Beispiel, dass der Balken grün ist, solange er sich im Bereich 5 % bis 80 % befindet. Ab 81% kann er eine gelbe Farbe aufweisen, ab 91 % eine orange und ab 95 % eine rote. Andere Werte und andere Farben für die Farbübergänge sind denkbar.

Handelt es sich bei dem laufenden Modell um ein Lebenszyklusmodell wird vorzugsweise die Zahl (76) der bereits durchlaufenen Generationen angezeigt.

Bei Erreichen der 100%-Marke ist ein lokales Maximum der Menge an Nematoden in einem bekämpfbaren Nemdatodenstadium (z.B. Nematodeneier) erreicht und es kann ein Bekämpfungsmittel gegen das entsprechende Nematodenstadium appliziert werden.

## Patentansprüche

1. Verfahren zur Bekämpfung von Nematoden in einem Boden umfassend die Schritte
(A) Installieren eines Temperatursensors in dem Boden
(B) Bereitstellen eines Modells der temperaturabhängigen Entwicklung von Nematoden, wobei das Modell das vollständige oder teilweise Durchlaufen eines oder mehrerer Lebenszyklen der Nematoden modelliert
(C) Messen von Temperaturwerten in dem Boden zu Messzeitpunkten
(D) Verknüpfen der Temperaturwerte mit den Messzeitpunkten
(E) Berechnen einer Wärmesumme auf Basis der Temperaturwerte und der Messzeitpunkte
(F) Vergleichen der berechneten Wärmesumme mit einem Zielparameter, wobei der Zielparameter diejenige Wärmesumme angibt, die erforderlich ist, um ein lokales Maximum der Menge an Nematoden in einem bekämpfbaren Nematodenstadium zu erreichen,
(G) Ausgeben einer Mitteilung für den Fall, dass die berechnete Wärmesumme den Zielparameter erreicht
(H) Applizieren eines Bekämpfungsmittels gegen Nematoden in dem bekämpfbaren Nematodenstadium.

2. Verfahren nach Anspruch 1, umfassend die Schritte
(A) Installieren eines Temperatursensors in dem Boden
(B) Bereitstellen eines Modells der temperaturabhängigen Entwicklung von Nematoden, wobei das Modell das vollständige oder teilweise Durchlaufen eines oder mehrerer Lebenszyklen von Nematoden modelliert und Starten des Modells nach Einpflanzen von Kulturpflanzen in dem Boden
(C) Messen von Temperaturwerten in dem Boden zu Messzeitpunkten
(D) Verknüpfen der Temperaturwerte mit den Messzeitpunkten
(E) Berechnen einer Wärmesumme auf Basis der Temperaturwerte und der Messzeitpunkte
(F) Vergleichen der berechneten Wärmesumme mit einem Zielparameter, wobei der Zielparameter diejenige Wärmesumme angibt, die erforderlich ist, um eine Generation an Nematoden beginnend mit Nematodeneiern einmal zu durchlaufen,
(G) Ausgeben einer Mitteilung für den Fall, dass die berechnete Wärmesumme den Zielparameter erreicht
(H) Applizieren eines Bekämpfungsmittels gegen Nematoden in dem bekämpfbaren Nematodenstadium.

3. Verfahren nach einem der Ansprüche 1 oder 2, wobei im Schritt (H) das Bekämpfungsmittel ein Nematizid auf Basis des Schimmelpilzes *Paecilomyces lilacinus* ist, das gegen Nematodeneier eingesetzt wird.

4. Verfahren nach einem der Ansprüche 1 bis 3, umfassend den weiteren Schritt (I) Wiederholen der Schritte (C) bis (G) oder (C) bis (H) wahrend der laufenden Vegetationsperiode der in dem Boden angepflanzten Kulturpflanzen.

5. Verfahren nach einem der Ansprüche 1 bis 4, wobei Schritt (A) die folgenden Schritte umfasst:
(a) Bereitstellen einer Sensoreinheit umfassend einen Temperatursensor
(b) Einbringen des Temperatursensors in einen Boden
(c) Inbetriebnehmen der Sensoreinheit
(d) Ermitteln des Standorts der Sensoreinheit
(e) Ermitteln einer eindeutigen Kennung der Sensoreinheit
(f) Verknüpfen des Standorts der Sensoreinheit mit der eindeutigen Kennung
(g) Ermitteln von Nutzerdaten
(h) Verknüpfen der Nutzerdaten mit der eindeutigen Kennung der Sensoreinheit
(i) Anzeigen des Standorts der Sensoreinheit auf einem Bildschirm des Nutzers.

6. Verfahren nach einem der Ansprüche 1 bis 5, wobei Schritt (G) umfasst:
Anzeigen des Standorts der Sensoreinheit und/oder Anzeigen von Temperaturwerten, die mit der Sensoreinheit erfasst werden, und/oder Anzeigen eines Ergebnisses der Modellierung der Entwicklung von Nematoden, das auf den Temperaturwerten basiert, die mit der Sensoreinheit erfasst werden, auf einem Bildschirm des Nutzers.

7. System umfassend
- eine Sensoreinheit mit einem Temperatursensor und einer Sendeeinheit, und
- ein Computersystem mit einer Empfangseinheit,
- ein Applikationssystem,
wobei die Sensoreinheit konfiguriert ist, Temperaturwerte mit dem Temperatursensor zu Messzeitpunkten zu erfassen,
wobei die Sensoreinheit konfiguriert ist, die Temperaturwerte mit der Sendeeinheit zu versenden,
wobei das Computersystem konfiguriert ist, die Temperaturwerte mit der Empfangseinheit zu empfangen,
wobei das Computersystem konfiguriert ist, auf Basis der empfangenen Temperaturwerte
und der Messzeitpunkte mit Hilfe eines Modells der temperaturabhängigen Entwicklung von Nematoden einen temperaturabhängigen Entwicklungsparameter zu berechnen und diesen mit einem Zielparameter zu vergleichen,
wobei das Modell das vollständige oder teilweise Durchlaufen eines oder mehrerer Lebenszyklen der Nematoden modelliert,
wobei es sich bei dem temperaturabhängigen Entwicklungsparameter um eine Wärmesumme handelt,
wobei es sich bei dem Zielparameter um diejenige Wärmesumme handelt, die erforderlich ist, um ein lokales Maximum der Menge an Nematoden in einem bekämpfbaren Nematodenstadium zu erreichen,
wobei das Computersystem konfiguriert ist, eine Mitteilung an das Applikationssystem zu erzeugen, wenn der temperaturabhängige Entwicklungsparameter den Zielparameter erreicht,
wobei die Mitteilung die Aufforderung enthält, dass eine Applikation eines Bekämpfungsmittels gegen Nematoden in dem bekämpfbaren Nematodenstadium erfolgen sollte, und das Applikationssystem ein Bekämpfungsmittel gegen Nematoden in dem bekämpfbaren Nematodenstadium appliziert.

8. System gemäss Anspruch 7, wobei es sich bei dem bekämpfbaren Nematodenstadium um Nematodeneier handelt.

9. System gemäss einem der Ansprüche 7 oder 8, umfassend ein erstes Computersystem, und ein zweites Computersystem,
wobei das erste Computersystem konfiguriert ist, Temperaturwerte und Messzeitpunkte zu empfangen, einen temperaturabhängigen Entwicklungsparameter zu berechnen, den berechneten temperaturabhängigen Entwicklungsparameter mit einem definierten Zielparameter zu vergleichen und dann eine Mitteilung an das zweite Computersystem zu
übermitteln, wenn der temperaturabhängige Entwicklungsparameter den definiertenZielparameter erreicht, wobei das zweite Computersystem konfiguriert ist, die Mitteilung zu empfangen und gegenüber einem Nutzer anzuzeigen.

10. System gemäss einem der Ansprüche 7 bis 9, umfassend Mittel zur Verknüpfung der Sensoreinheit mit einem Nutzer,
- wobei das Computersystem konfiguriert ist, dem Nutzer ausschliesslich solche Informationen anzuzeigen, die auf Temperaturwerten basieren, die mit der mit dem Nutzer verknüpften Sensoreinheit erfasst werden.

11. System gemäss einem der Ansprüche 7 bis 10, umfassend
- Mittel zur Bestimmung des Standorts der Sensoreinheit
- eine eindeutige Kennung, anhand derer die Sensoreinheit identifizierbar ist
- Mittel zur Verknüpfung des Standorts der Sensoreinheit mit der eindeutigen Kennung.

12. Computerprogrammprodukt umfassend einen Programmcode, der auf einem Datenträger gespeichert ist, und der ein Computersystem umfassend einen Arbeitsspeicher veranlasst, die folgenden Schritte auszuführen, wenn der Programmcode in den Arbeitsspeicher geladen ist,
Empfangen von Temperaturwerten, die zu Messzeitpunkten erfasst worden sind, Berechnen eines temperaturabhängigen Entwicklungsparameters auf Basis der empfangenen Temperaturwerte und der Messzeitpunkte mit Hilfe eines Modells der temperaturabhängigen Entwicklung von Nematoden,
wobei das Modell das vollständige oder teilweise Durchlaufen eines oder mehrerer Lebenszyklen der Nematoden modelliert,
wobei es sich bei dem temperaturabhängigen Entwicklungsparameter um eine Wärmesumme handelt,
Vergleichen des berechneten temperaturabhängigen Entwicklungsparameters mit einemdefinierten Zielparameter
wobei es sich bei dem Zielparameter um diejenige Wärmesumme handelt, die erforderlich ist, um ein lokales Maximum der Menge an Nematoden in einem bekämpfbaren Nematodenstadium zu erreichen,
Erzeugen einer Mitteilung an das Applikationssystem, wenn der temperaturabhängige Entwicklungsparameter den definierten Zielparameter erreicht, womit das Applikationssystem ein Bekämpfungsmittel gegen Nematoden in dem bekämpfbaren Nematodenstadium appliziert.

13. Computerprogrammprodukt gemäss Anspruch 12, wobei die Mitteilung zum Inhalt hat, dass ein lokales Maximum in der Menge von Nematoden in dem bekämpfbaren Nematodenstadium erreicht worden ist.

14. Computerprogrammprodukt gemäss einem der Ansprüche 12 oder 13 umfassend einen Programmcode, der auf einem Datenträger gespeichert ist, und der ein Computersystem umfassend einen Arbeitsspeicher veranlasst, einen oder mehrere der Schritte des Verfahrens gemäss einem der Ansprüche 1 bis 6 auszuführen, wenn der Programmcode in den Arbeitsspeicher geladen ist.

15. Kit umfassend das Computerprogrammprodukt gemäss einem der Ansprüche 12 bis 14 und ein Bekämpfungsmittel gegen Nematoden in dem bekämpfbaren Nematodenstadium, und/oder eine Sensoreinheit mit einem Temperatursensor und einer Sendeeinheit.

16. Kit gemaess Anspruch 15, wobei das Bekaempfungsmittel gegen Nematoden ein Nematizid auf Basis des Schimmelpilzes *Paecilomyces lilacinus* gegen Nematodeneier ist.

## Claims

1. Method for controlling nematodes in a soil, comprising the steps of
(A) installing a temperature sensor in the soil
(B) providing a model of the temperature-dependent development of nematodes, the model modelling the complete or partial passage through one or more life cycles of the nematodes
(C) measuring temperature values in the soil at measurement time points
(D) linking the temperature values to the measurement time points
(E) calculating a heat sum on the basis of the temperature values and the measurement time points
(F) comparing the calculated heat sum with a target parameter, the target parameter indicating the heat sum required to reach a local maximum of the quantity of nematodes in a controllable nematode stage,
(G) outputting a message in the event that the calculated heat sum reaches the target parameter
(H) applying a control agent against nematodes in the controllable nematode stage.

2. Method according to Claim 1, comprising the steps of
(A) installing a temperature sensor in the soil
(B) providing a model of the temperature-dependent development of nematodes, the model modelling the complete or partial passage through one or more life cycles of nematodes, and starting the model after crop plants have been planted in the soil
(C) measuring temperature values in the soil at measurement time points
(D) linking the temperature values to the measurement time points
(E) calculating a heat sum on the basis of the temperature values and the measurement time points
(F) comparing the calculated heat sum with a target parameter, the target parameter indicating the heat sum required to pass once through one generation of nematodes starting with nematode eggs,
(G) outputting a message in the event that the calculated heat sum reaches the target parameter
(H) applying a control agent against nematodes in the controllable nematode stage.

3. Method according to either of Claims 1 and 2, wherein in step (H) the control agent is a nematicide based on the mould Paecilomyces lilacinus, which is used against nematode eggs.

4. Method according to any of Claims 1 to 3, comprising the further step (I) of repeating steps (C) to (G) or (C) to (H) during the current growing season of the crop plants planted in the soil.

5. Method according to any of Claims 1 to 4, wherein step (A) comprises the following steps:
(a) providing a sensor unit comprising a temperature sensor
(b) introducing the temperature sensor into a soil
(c) starting up the sensor unit
(d) ascertaining the location of the sensor unit
(e) ascertaining a unique identifier of the sensor unit
(f) linking the location of the sensor unit to the unique identifier
(g) ascertaining user data
(h) linking the user data to the unique identifier of the sensor unit
(i) displaying the location of the sensor unit on a screen of the user.

6. Method according to any of Claims 1 to 5, wherein step (G) comprises:
displaying the location of the sensor unit and/or displaying temperature values which are captured using the sensor unit and/or displaying a result of the modelling of the development of nematodes, which result is based on the temperature values which are captured using the sensor unit, on a screen of the user.

7. System comprising
- a sensor unit having a temperature sensor and a transmitting unit, and
- a computer system having a receiving unit,
- an application system,
wherein the sensor unit is configured to capture temperature values using the temperature sensor at measurement time points,
wherein the sensor unit is configured to send the temperature values using the transmitting unit,
wherein the computer system is configured to receive the temperature values using the receiving unit,
wherein the computer system is configured to calculate a temperature-dependent development parameter on the basis of the received temperature values
and the measurement time points with the aid of a model of the temperature-dependent development of nematodes and to compare said development parameter with a target parameter,
wherein the model models the complete or partial passage through one or more life cycles of the nematodes,
wherein the temperature-dependent development parameter is a heat sum,
wherein the target parameter is the heat sum required to reach a local maximum of the quantity of nematodes in a controllable nematode stage,
wherein the computer system is configured to generate a message to the application system when the temperature-dependent development parameter reaches the target parameter,
wherein the message contains the request that application of a control agent against nematodes in the controllable nematode stage should be effected, and the application system applies a control agent against nematodes in the controllable nematode stage.

8. System according to Claim 7, wherein the controllable nematode stage is nematode eggs.

9. System according to either of Claims 7 and 8, comprising a first computer system and a second computer system,
wherein the first computer system is configured to receive temperature values and measurement time points, to calculate a temperature-dependent development parameter, to compare the calculated temperature-dependent development parameter with a defined target parameter and to then transmit a message to the second computer system when the temperature-dependent development parameter reaches the defined target parameter, wherein the second computer system is configured to receive the message and to display it to a user.

10. System according to any of Claims 7 to 9, comprising means for linking the sensor unit to a user,
- wherein the computer system is configured to display to the user only that information which is based on temperature values which are captured using the sensor unit linked to the user.

11. System according to any of Claims 7 to 10, comprising
- means for determining the location of the sensor unit
- a unique identifier, by means of which it is possible to identify the sensor unit
- means for linking the location of the sensor unit to the unique identifier.

12. Computer program product comprising a program code which is stored on a data carrier and which causes a computer system comprising a main memory to execute the following steps when the program code is loaded into the main memory,
receiving temperature values which have been captured at measurement time points, calculating a temperature-dependent development parameter on the basis of the received temperature values and the measurement time points with the aid of a model of the temperature-dependent development of nematodes,
wherein the model models the complete or partial passage through one or more life cycles of the nematodes,
wherein the temperature-dependent development parameter is a heat sum,
comparing the calculated temperature-dependent development parameter with a defined target parameter wherein the target parameter is the heat sum required to reach a local maximum of the quantity of nematodes in a controllable nematode stage,
generating a message to the application system when the temperature-dependent development parameter reaches the defined target parameter, as a result of which the application system applies a control agent against nematodes in the controllable nematode stage.

13. Computer program product according to Claim 12, wherein the content of the message is that a local maximum in the quantity of nematodes in the controllable nematode stage has been reached.

14. Computer program product according to either of Claims 12 and 13, comprising a program code which is stored on a data carrier and which causes a computer system comprising a main memory to execute one or more of the steps of the method according to any of Claims 1 to 6 when the program code is loaded into the main memory.

15. Kit comprising the computer program product according to any of Claims 12 to 14 and a control agent against nematodes in the controllable nematode stage and/or a sensor unit having a temperature sensor and a transmitting unit.

16. Kit according to Claim 15, wherein the control agent against nematodes is a nematicide based on the mould Paecilomyces lilacinus against nematode eggs.

## Revendications

1. Procédé de lutte contre les nématodes dans un sol, comprenant les étapes suivantes
(A) installation d'un capteur de température dans le sol
(B) fourniture d'un modèle du développement des nématodes en fonction de la température, le modèle modélisant le déroulement complet ou partiel d'un ou plusieurs cycles de vie des nématodes
(C) mesure des valeurs de température dans le sol à des instants de mesure
(D) liaison des valeurs de température aux instants de mesure
(E) calcul d'une somme de températures sur la base des valeurs de température et des instants de mesure
(F) comparaison de la somme de températures calculée à un paramètre cible, le paramètre cible indiquant la somme de températures qui est nécessaire pour atteindre un maximum local de la quantité de nématodes à un stade de nématode où ils peuvent être combattus,
(G) délivrance d'un message dans le cas où la somme de températures calculée atteint le paramètre cible
(H) application d'un produit de lutte contre les nématodes au stade de nématode où ils peuvent être combattus.

2. Procédé selon la revendication 1, comprenant les étapes suivantes
(A) installation d'un capteur de température dans le sol
(B) fourniture d'un modèle du développement des nématodes en fonction de la température, le modèle modélisant le déroulement complet ou partiel d'un ou de plusieurs cycles de vie des nématodes et démarrage du modèle après avoir planté des plantes cultivées dans le sol
(C) mesure des valeurs de température dans le sol à des instants de mesure
(D) liaison des valeurs de température aux instants de mesure
(E) calcul d'une somme de températures sur la base des valeurs de température et des instants de mesure
(F) comparaison de la somme de températures calculée à un paramètre cible, le paramètre cible indiquant la somme de températures qui est nécessaire pour parcourir une génération de nématodes en commençant par des œufs de nématodes,
(G) délivrance d'un message dans le cas où la somme de températures calculée atteint le paramètre cible
(H) application d'un produit de lutte contre les nématodes au stade de nématode où ils peuvent être combattus.

3. Procédé selon l'une des revendications 1 et 2, le produit de lutte à l'étape (H) étant un nématicide à base de la moisissure Paecilomyces lilacinus, qui est utilisé contre les œufs de nématodes.

4. Procédé selon l'une des revendications 1 à 3, comprenant l'étape supplémentaire (I) répétition des étapes (C) à (G) ou (C) à (H) pendant la période de végétation en cours des plantes cultivées plantées dans le sol.

5. Procédé selon l'une des revendications 1 à 4, l'étape (A) comprenant les étapes suivantes :
(a) fourniture d'une unité de capteur comprenant un capteur de température
(b) introduction du capteur de température dans un sol
(c) mise en service de l'unité de capteur
(d) détermination de l'emplacement de l'unité de capteur
(e) détermination d'un identificateur unique de l'unité de capteur
(f) liaison de l'emplacement de l'unité de capteur à l'identificateur unique
(g) détermination de données d'utilisateur
(h) liaison des données d'utilisateur à l'identificateur unique de l'unité de capteur
(i) affichage de l'emplacement de l'unité de capteur sur un écran de l'utilisateur.

6. Procédé selon l'une des revendications 1 à 5, l'étape (G) comprenant :
affichage de l'emplacement de l'unité de capteur et/ou affichage de valeurs de température qui ont été acquises avec l'unité de capteur et/ou affichage d'un résultat de la modélisation du développement de nématodes, qui se base sur les valeurs de température qui sont acquises avec l'unité de capteur, sur un écran de l'utilisateur.

7. Système comportant
- une unité de capteur comprenant un capteur de température et une unité d'émission, et
- un système informatique comprenant une unité de réception,
- un système d'application,
l'unité de capteur étant configurée pour acquérir des valeurs de température avec le capteur de température à des instants de mesure,
l'unité de capteur étant configurée pour envoyer les valeurs de température avec l'unité d'émission,
le système informatique étant configuré pour recevoir les valeurs de température avec l'unité de réception,
le système informatique étant configuré pour, sur la base des valeurs de température reçues
et des instants de mesure, calculer un paramètre de développement en fonction de la température à l'aide d'un modèle du développement des nématodes en fonction de la température et comparer celui-ci à un paramètre cible, le modèle modélisant le déroulement complet ou partiel d'un ou de plusieurs cycles de vie des nématodes,
le paramètre de développement en fonction de la température étant une somme de températures,
le paramètre cible étant la somme de températures qui est nécessaire pour atteindre un maximum local de la quantité de nématodes à un stade de nématode où ils peuvent être combattus,
le système informatique étant configuré pour générer un message destiné au système d'application lorsque le paramètre de développement en fonction de la température atteint le paramètre cible,
le message contenant l'exigence selon laquelle une application d'un produit de lutte contre les nématodes devrait avoir lieu au stade de nématode où ils peuvent être combattus, et le système d'application appliquant un produit de lutte contre les nématodes au stade de nématode où ils peuvent être combattus.

8. Système selon la revendication 7, le stade de nématode où ils peuvent être combattus étant les œufs de nématode.

9. Système selon l'une des revendications 7 et 8, comprenant un premier système informatique et un deuxième système informatique,
le premier système informatique étant configuré pour recevoir des valeurs de température et des instants de mesure, pour calculer un paramètre de développement en fonction de la température, pour comparer le paramètre de développement en fonction de la température calculé avec un paramètre cible défini et ensuite pour communiquer un message au deuxième système informatique, lorsque le paramètre de développement en fonction de la température atteint le paramètre cible défini, le deuxième système informatique étant configuré pour recevoir le message et pour l'afficher à l'intention d'un utilisateur.

10. Système selon l'une des revendications 7 à 9, comprenant des moyens pour lier l'unité de capteur à un utilisateur,
- le système informatique étant configuré pour afficher à l'utilisateur exclusivement des informations qui sont basées sur les valeurs de température qui ont été acquises avec l'unité de capteur liée à l'utilisateur.

11. Système selon l'une des revendications 7 à 10, comprenant
- des moyens pour déterminer l'emplacement de l'unité de capteur
- un identificateur unique, à l'aide duquel l'unité de capteur est identifiable
- des moyens destinés à lier l'emplacement de l'unité de capteur à l'identificateur unique.

12. Produit de programme informatique comprenant un code de programme qui est enregistré sur un support de données et qui amène un système informatique comprenant une mémoire de travail à exécuter les étapes suivantes lorsque le code de programme est chargé dans la mémoire de travail,
réception des valeurs de température qui ont été acquises aux instants de mesure, calcul d'un paramètre de développement en fonction de la température sur la base des valeurs de température reçues et des instants de mesure à l'aide d'un modèle du développement des nématodes en fonction de la température,
le modèle modélisant le déroulement complet ou partiel d'un ou de plusieurs cycles de vie des nématodes,
le paramètre de développement en fonction de la température étant une somme de températures,
comparaison du paramètre de développement en fonction de la température calculé avec un paramètre cible défini
le paramètre cible étant la somme de températures qui est nécessaire pour atteindre un maximum local de la quantité de nématodes à un stade de nématode où ils peuvent être combattus,
génération d'un message destiné au système d'application lorsque le paramètre de développement en fonction de la température atteint le paramètre cible défini, ce par quoi le système d'application applique un produit de lutte contre les nématodes au stade de nématode où ils peuvent être combattus.

13. Produit de programme informatique selon la revendication 12, le message ayant pour teneur qu'un maximum local a été atteint dans la quantité de nématodes au stade de nématode où ils peuvent être combattus.

14. Produit de programme informatique selon l'une des revendications 12 ou 13, comprenant un code de programme qui est mémorisé sur un support de données et qui amène un système informatique comprenant une mémoire de travail à exécuter une ou plusieurs des étapes du procédé selon l'une des revendications 1 à 6 lorsque le code de programme est chargé dans la mémoire de travail.

15. Kit comprenant le produit de programme informatique selon l'une des revendications 12 à 14 et un produit de lutte contre les nématodes dans le stade de nématode où ils peuvent être combattus et/ou une unité de capteur comprenant un capteur de température et une unité d'émission.

16. Kit selon la revendication 15, le produit de lutte contre les nématodes étant un nématicide à base de la moisissure Paecilomyces lilacinus contre les œufs de nématodes.
